# EUROPÄISCHE PATENTSCHRIFT

(11) **EP 2 916 031 B1**
(45) Veröffentlichungstag und Bekanntmachung des Hinweises auf die Patenterteilung: **22.05.2019**
(21) Anmeldenummer: 14157996.1
(22) Anmeldetag: 06.03.2014
(51) Int. Cl.: F16F 15/02, F16F 7/10, F16F 15/03

(54) **Verfahren und Vorrichtung zur Schwingungsdämpfung von rotierenden oder rotationssymmetrischen Bauteilen**
Method and device for damping vibrations in rotating or rotationally symmetrical components
Procédé et dispositif d'amortissement des vibrations de composants rotatifs ou à symétrie de rotation

(43) Veröffentlichungstag der Anmeldung: 09.09.2015
(73) Patentinhaber: Wölfel Beratende Ingenieure GmbH & Co. KG, 97204 Höchberg (DE)
(72) Erfinder: Pankoke, Steffen, 97837 Erlenbach (DE); Engelhardt, Jürgen, 97249 Eisingen (DE); Loix, Nicolas, 1401 Nivelles (Baulers) (BE)
(74) Vertreter: Keil & Schaafhausen Patent- und Rechtsanwälte PartGmbB

(56) Entgegenhaltungen:
- EP-A1- 0 628 745
- EP-A2- 0 872 662
- FR-A1- 2 689 583
- US-A1- 2011 057 367

## Beschreibung

Die Erfindung betrifft ein Verfahren zur Schwingungsdämpfung von rotierenden oder rotationssymmetrischen Bauteilen, wobei mindestens drei Sensoren und mindestens drei aktive Tilger umfangseitig an rotierenden oder rotationssymmetrischen Bauteil angeordnet sind. Die Erfindung betrifft weiterhin eine Vorrichtung zur Schwingungsdämpfung von rotierenden oder rotationssymmetrischen Bauteilen, umfassend eine Steuereinheit, sowie mindestens drei Sensoren und mindestens drei aktive Tilger, wobei die mindestens drei Sensoren und die mindestens drei aktiven Tilger umfangseitig an einem rotierenden oder rotationssymmetrischen Bauteil angeordnet sind.

Derartige Schwingungsdämpfer werden beispielsweise zur Dämpfung von ungewollten Schwingungen von Windenergieanlagen, Turbinen, Generatoren, Flugzeugmotoren und anderen Vorrichtungen und Gebäuden, die starken Schwingungen ausgesetzt sind, verwendet.

"Rotationssymmetrisch" bezeichnet hier nicht zwangsläufig eine exakte Rotationssymmetrie, sondern üblicherweise nur eine annähernde Rotationssymmetrie.

Eine derartige Tilgeranordnung ist beispielsweise aus EP 2 639 475 A1 bekannt. Mehrere aktive Tilger sind an einer Befestigungsanordnung angeordnet, wobei die Bewegungsachsen der Tilger am Massenschwerpunkt der Befestigungsanordnung vorbeigerichtet sind. Hierdurch können durch die aktiven Tilger nicht nur Kräfte erzeugt werden, sondern auch Drehmomente.

Aus EP 0 872 662 A2 ist eine Anordnung von Schwingungsdämpfern und Sensoren bekannt, die an einem Triebwerk-Träger eines Flugzeugs angeordnet sind. Es sind externe Sensoren sowie schwingungsdämpferinterne Sensoren vorgesehen. Einer der Sensoren misst hierbei vertikale Beschleunigungen und wird zur Steuerung zweier Schwingungsdämpfer verwendet, während ein anderer Sensor zur Messung von horizontalen Beschleunigungen und zur Steuerung zweier Schwingungsdämpfer verwendet wird

Aus US 2011/057367 A1 ist ein aktiver Schwingungsdämpfer sowie ein Verfahren zur Herstellung eines solchen Schwingungsdämpfers bekannt. Der Schwingungsdämpfer ist ein elektromagnetischer linearer Schwingungsdämpfer.

Wird eine derartige Tilgeranordnung nun umfangseitig um ein rotationssymmetrisches oder rotierendes Bauteil wie beispielsweise einen Rotor angeordnet, so können sich die Tilger gegenseitig negativ beeinflussen. Dies verringert die Effektivität der Schwingungsdämpfung und erhöht den Energieverbrauch der Tilger. Im Falle eines rotierenden Bauteils kann es auch zu einer ungewollten, ungünstigen Beeinflussung der gewollten Bauteilrotation durch die Tilger kommen.

Der Erfindung liegt daher die Aufgabe zugrunde, eine effektivere Dämpfung von Schwingungen von rotationssymmetrischen oder rotierenden Bauteilen zu ermöglichen.

Diese Aufgabe wird bei einem Verfahren der eingangs genannten Art erfindungsgemäß dadurch gelöst, dass:
- Messsignale durch die mindestens drei Sensoren bereitgestellt werden,
- die Messsignale in ein tangentiales Signal und zwei kartesische Signale umgewandelt werden,
- Tilger-Steuersignale zur Steuerung der mindestens drei aktiven Tilger unter Verwendung des tangentialen Signals und der zwei kartesischen Signale erzeugt werden.

Es werden also mehrere Sensoren umfangseitig um ein Bauteil, wie beispielsweise einen Rotor, angeordnet. Vorzugsweise messen ein Teil oder alle Sensoren Beschleunigungen und/oder Geschwindigkeiten jeweils in tangentialer Richtung, also entlang der lokalen Bewegungsrichtung am Ort des Sensors. Die von den Sensoren bereitgestellten Messsignale werden in einem weiteren Schritt in ein tangentiales und zwei kartesische Signale umgewandelt. Die Umwandlung kann dementsprechend beispielsweise eine Koordinatentransformation der Signale umfassen. Hierbei wird vorzugsweise die Installationsposition des Tilgers am Bauteil mit einberechnet. Die kartesischen Koordinaten sind vorzugsweise körperfest bezüglich des Bauteils und der Tilger gewählt.

Die kartesischen Signale repräsentieren beispielsweise Schwingungen senkrecht zur Symmetrie- oder Rotationsachse des Bauteils, im Falle eines Rotors einer Windenergieanlage also beispielsweise horizontale und vertikale Schwingungen der Rotornabe. Diese Schwingungen können durch äußere Anregungen oder durch eine Rotation des Bauteils selbst angeregt werden, und betreffen in der Regel solche Schwingungen, die möglichst stark gedämpft werden sollen.

Das tangentiale Signal wiederum kann einerseits eine normale und gewollte variable Rotation des Bauteils repräsentieren, wie beispielsweise einen beschleunigenden oder abbremsenden Rotor. Gleichzeitig umfasst das tangentiale Signal aber auch höherfrequente bzw. höherharmonische Schwingungen bzw. quasi-stationäre Schwingungen. Das tangentiale Signal betrifft also eine Mischung von "gewollten" und "ungewollten" Schwingungen und sollte daher nur teilweise gedämpft werden. Diese unterschiedlichen Signalanteile des tangentialen Signals können beispielsweise durch das Bereitstellen eines Drehzahlsignals getrennt werden, wie noch an späterer Stelle genauer erklärt wird.

In einem nächsten Schritt werden auf Grundlage des tangentialen Signals und der zwei kartesischen Signale Tilger-Steuersignale erzeugt. Aufgrund der vorherigen Kombination und Umwandlung der einzelnen Messsignale der Sensoren können die einzelnen Tilger nunmehr gezielter gesteuert werden und unnötige gegenseitige Störungen der Tilger verringert werden. Dies erlaubt es, die Amplitude der ungewollten Schwingungen noch stärker zu verringern, als dies zuvor am Stand der Technik möglich war. Gleichzeitig kann der Stromverbrauch der Tilger gesenkt und der Verschleiß des Bauteils durch die ungewollten Schwingungen verringert werden.

Vorzugsweise werden aus dem tangentialen Signal und den zwei kartesischen Signalen ein tangentiales Steuersignal und zwei kartesische Steuersignale erzeugt, wobei die Tilger-Steuersignale aus dem tangentialen Steuersignal und den kartesischen Steuersignalen erzeugt werden.

Die Steuerung erfolgt also zunächst in den gemeinsamen tangentialen und kartesischen Koordinaten. Aus dem tangentialen Steuersignal und den zwei kartesischen Steuersignalen werden dann die einzelnen Tilger-Steuersignale berechnet. Hierbei wird vorzugsweise die Installationsposition der einzelnen Tilger am Bauteil mit einberechnet. Durch dieses Vorgehen wird sichergestellt, dass die Tilger möglichst effektive Steuersignale erhalten und sich nicht gegenseitig stören.

Vorzugsweise wird zusätzlich zu den Messsignalen der Sensoren ein Drehzahlsignal des Bauteils bereitgestellt. Ein zusätzliches Drehzahlsignal erlaubt es, die betriebsbedingte Rotation und Beschleunigung des Bauteils besser von den überlagerten Beschleunigungen in Folge ungewollter Schwingungen zu trennen. Dies betrifft insbesondere das tangentiale Signal, aber auch die zwei kartesischen Signale. Ein Drehzahlsignal erlaubt es beispielsweise, höherharmonische Schwingungen besser zu identifizieren. Das Drehzahlsignal kann extern oder durch einen zusätzlichen Drehzahlsensor am Bauteil bereitgestellt werden.

Es ist von Vorteil, wenn mindestens ein Sensor eine lineare Messrichtung aufweist und mindestens ein Tilger ein linearer Tilger ist, wobei die Messrichtung des linearen Sensors mit der Wirkrichtung des linearen Tilgers übereinstimmt. Es können also kostengünstigere eindimensional messende Sensoren sowie eindimensional wirkende aktive Tilger verwendet werden. Die Messrichtung je eines Sensors kann dabei vorzugsweise mit der Wirkrichtung je eines aktiven Tilgers übereinstimmen. Es ist auch möglich, je einen Sensor und je einen Tilger in einem Tilgermodul zusammenzufassen, wodurch die Installation erleichtert wird. Gleichzeitig erlaubt eine modulare Bauweise das Verfahren und die Vorrichtung für Bauteile von verschiedener Größe zu verwenden, indem beispielsweise die Anzahl der Tilgermodule angepasst wird.

Vorzugsweise sind die Wirkrichtungen aller Tilger in einer gemeinsamen Ebene, insbesondere in einer Ebene senkrecht zu einer Symmetrie- und/oder Rotationsachse des Bauteils, angeordnet. Bei rotierenden oder rotationssymmetrischen Bauteilen treten Schwingungen oftmals in einer bevorzugten Ebene auf. Beispielsweise im Falle eines Rotors ist dies eine Ebene senkrecht zur Rotationsachse. Die Tilger können in diesem Fall auch alle in dieser gemeinsamen Ebene umfangseitig um das Bauteil herum angeordnet sein. Hierbei ist es bevorzugt, wenn die Wirkrichtung der einzelnen Tilger jeweils am Ort des Tilgers tangential entlang des Bauteils verläuft. Hierdurch lässt sich eine möglichst gleichmäßige Schwingungsdämpfung erzielen. Vorzugsweise sind die Tilger umfangseitig in gleichmäßigen Abständen um das Bauteil angeordnet.

Vorzugsweise sind die Messrichtungen aller Sensoren in einer gemeinsamen Ebene, insbesondere in einer Ebene senkrecht zu einer Symmetrie- und/oder Rotationsachse des Bauteils, angeordnet. Dies ist insbesondere dann von Vorteil, wenn auch die Wirkrichtungen der Tilger in derselben Ebene angeordnet sind. In diesem Fall liefern die Sensoren beispielsweise möglichst genaue Beschleunigungsmesswerte in der für die Schwingungsdämpfung der Tilger relevanten Ebene. Vorzugsweise verläuft die Messrichtung der einzelnen Sensoren jeweils tangential entlang des Umfangs des Bauteils. Vorzugsweise können die Sensoren bei einem Bauteil mit kreisförmigem Querschnitt, wie einem Rotor, umfangseitig in gleichmäßigen Abständen angeordnet werden und jeweils tangential entlang des Kreisumfangs messen.

Vorzugsweise werden die Steuersignale derart gewählt, dass die kartesischen Signale und/oder die höherharmonischen Anteile des tangentialen Signals minimiert werden. Da die kartesischen Signale üblicherweise lediglich ungewollte, wie beispielsweise höherharmonische oder quasi-stationäre Schwingungen repräsentiert, ist es von Vorteil, die kartesischen Signale und damit die zugehörigen ungewollten Schwingungen möglichst stark zu dämpfen. Dementsprechend können beispielsweise auch im Falle der Verwendung eines tangentialen Steuersignals und zweier kartesischer Steuersignale die kartesischen Steuersignale derart gewählt werden, dass die kartesischen Signale minimiert werden. Vorzugsweise werden die Steuersignale derart gewählt, dass die höherharmonischen Anteile des tangentialen Signals minimiert werden. "Höherharmonisch" ist hier bezüglich einer Rotationsfrequenz des Bauteils zu verstehen. Diese Anteile betreffen üblicherweise "ungewollte" Schwingungskomponenten.

Die oben genannte Aufgabe wird auch durch eine Vorrichtung mit den Merkmalen des Anspruchs 8 gelöst.

Die Vorrichtung zur Schwingungsdämpfung umfasst hierbei also eine Steuereinheit zum Empfangen und Bearbeiten der Messsignale sowie zur Erzeugung der einzelnen Tilger-Steuersignale aus den zuvor bereitgestellten Messsignalen.

Es ist bevorzugt, wenn mindestens ein Tilger eine, insbesondere durch elastomere Federn, elastisch aufgehängte Reaktionsmasse umfasst, die durch mindestens zwei, insbesondere differentiell wirkende, Elektromagnete bewegt wird. Eine derartige Ausbildung des Tilgers erlaubt eine möglichst präzise Steuerbarkeit der einzelnen Tilger. Die Elektromagnete können also jeweils Kräfte mit entgegengesetzter Richtung auf die Reaktionsmasse erzeugen. Es sind aber auch alternative Aktortypen statt differentiell wirkender Elektromagnete vorstellbar.

Es ist bevorzugt, wenn die Elektromagnete Teil der Reaktionsmasse sind. Hierdurch kann die Reaktionsmasse des Tilgers verhältnismäßig groß gewählt werden, ohne dass die Gesamtmasse des Tilgers unnötig vergrößert wird.

Es ist von Vorteil, wenn die Elektromagnete oder den Elektromagneten vorgeschaltete Leistungsverstärker durch einen Stromsteller mit einem konstanten Vormagnetisierungsstrom sowie einem Steuerstrom mit positivem oder negativem Vorzeichen versorgt werden. Hierdurch lässt sich eine lineare Kraft-Strom-Kennlinie erzielen, die sich positiv auf die Regelbarkeit der einzelnen Tilger auswirkt. Insbesondere lässt sich so eine möglichst gute Linearität zwischen Tilgerkraft und Steuerstrom erzielen.

Vorzugsweise umfasst mindestens ein Tilger mindestens zwei magnetisierbare Teile und zwischen je einem magnetisierbaren Teil und je einem Elektromagnet ist ein Luftspalt angeordnet. Es können beispielsweise an zwei Enden des Tilgers die beiden magnetisierbaren Teile angeordnet sein, die jeweils durch einen Luftspalt von den zwischen den magnetisierbaren Teilen angeordneten Elektromagneten beabstandet sind. Hierbei können vorzugsweise die beiden Elektromagnete als Teil der Reaktionsmasse in Wirkrichtung zwischen den beiden magnetisierbaren Teilen angeordnet sein. Die magnetisierbaren Teile können beispielsweise ferromagnetische Teile sein und vorzugsweise Teile eines Rahmens oder eines Gehäuses des Tilgers bzw. eines Tilgermoduls sein.

Es ist bevorzugt, dass die Größe der Luftspalte in der Ruheposition der Reaktionsmasse über eine Stellvorrichtung einstellbar ist. Es ist besonders bevorzugt, wenn in der Ruheposition die Reaktionsmasse die beiden Luftspalte gleich groß eingestellt sind, wodurch sich eine gute Steuerbarkeit des Tilgers ergibt. Vorzugsweise können hierbei die Tilgereigenfrequenz und der Luftspalt so abgestimmt werden, dass die Summe aus den Federkräften einer Aufhängung der Reaktionsmasse und den Magnetkräften stets eine Rückstellkraft für die Reaktionsmasse gewährleistet. So bildet in diesem Fall die Summe der negativen Steifigkeit, die sich aus der Wirkung des Elektromagnets ergibt, und der Steifigkeit der Reaktionsmassenaufhängung stets einen positiven Wert. Dann kann auf einen Lageregelkreis für die Position der Reaktionsmasse verzichtet werden.

Vorzugsweise weisen die Elektromagnete mindestens eines Tilgers lokale Leistungsverstärker auf. Ein derartiger Leistungsverstärker, der die Elektromagnete mit Strom versorgen kann, kann direkt auf dem Tilger verbaut werden. Durch eine solche Ausgestaltung ist es möglich, das Rauschniveau der Leistungsverstärker durch möglichst kurze Leitungen gering zu halten. Es ergibt sich dadurch ein sehr sauberes und präzises Stellsignal für die Elektromagnete. Die Leistungsverstärker können in diesem Fall direkt durch die Steuereinheit angesteuert werden. Es ist aber auch möglich, einen Teil oder alle Leistungsverstärker getrennt von den Tilgern bzw. an der Steuereinheit anzuordnen.

Bevorzugt ist, dass die Steuersignale, die von der Steuereinheit an die Leistungsverstärker übertragen werden, digital, beispielsweise über einen Feldbus, übertragen werden. Dadurch kann die Beeinflussung der Steuersignale durch elektromagnetische Felder, die beispielsweise durch die Elektromagnete des Tilgers selbst oder durch andere Bauteile erzeugt werden, nahezu vollständig unterdrückt werden. Dies wirkt sich positiv auf das Rauschniveau aus und führt zu einem sauberen und präzisen Steuersignal.

Vorzugsweise liefert mindestens ein Sensor ein zur Größe einer Beschleunigung proportionales Stromsignal an die Steuereinheit. Dies hat den Vorteil, dass die Beeinflussung des Sensorsignals durch elektromagnetische Felder, die beispielsweise durch die Elektromagnete des Tilgers selbst oder durch andere Bauteile erzeugt werden, geringer ist als dies beispielsweise bei der Verwendung eines Spannungssignals der Fall wäre.

Die Erfindung wird im Folgenden anhand eines bevorzugten Ausführungsbeispiels in Verbindung mit der Zeichnung beschrieben. Hierin zeigen in schematischer Ansicht:
- Fig. 1: eine vereinfachte Darstellung einer erfindungsgemäßen Vorrichtung,
- Fig. 2: ein Ablaufdiagramm eines erfindungsgemäßen Verfahrens und
- Fig. 3: eine Darstellung eines einzelnen Tilgers.

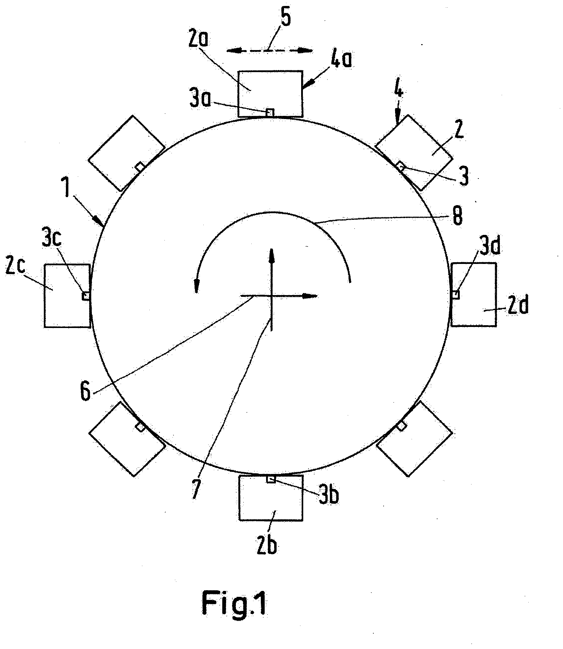

In Fig. 1 ist ein Querschnitt eines rotationssymmetrischen und/oder rotierenden Bauteils 1 dargestellt. Dies könnte beispielsweise der Querschnitt eines Rotors oder einer Rotornabe sein. Umfangseitig um das Bauteil 1 ist eine Vielzahl von Tilgern 2 angeordnet. Die Tilger 2 können derart am Bauteil angeordnet werden, dass ihre Wirkrichtungen jeweils lokal tangential zum Umfang des Bauteils und/oder tangential zur lokalen Rotationsrichtung des Bauteils verlaufen.

Weiterhin ist eine Vielzahl von Sensoren 3 umfangseitig um das Bauteil 1 angeordnet. Sowohl die Tilger 2 als auch die Sensoren 3 sind in regelmäßigen Abständen, beispielsweise im Abstand von 45°, um den Umfang des Bauteils verteilt. In der vorliegenden Ausführungsform ist zudem je ein Tilger 2 mit einem Sensor 3 zu einem Tilgermodul 4 zusammengefasst.

Die Messrichtungen der einzelnen Sensoren 3 sind vorzugsweise so gewählt, dass sie ebenfalls tangential entlang des Umfangs des Bauteils bzw. tangential zur lokalen Rotationsrichtung des Bauteils verlaufen. Bezüglich des Tilgermoduls 4a deutet ein Doppelpfeil 5 eine Wirkrichtung des Tilgers 2a sowie die Messrichtung des Sensors 3a an.

Die Sensoren 3 können hierbei lineare Beschleunigungssensoren umfassen, die jeweils eine tangentiale Beschleunigung des Bauteils 1 am jeweiligen Messort bestimmen. Durch einen Vergleich beispielsweise der tangentialen Beschleunigungen des Sensors 3a mit einer tangentialen Beschleunigung des Sensors 3b lässt sich im vorliegenden Beispiel eine der Rotation überlagerte horizontale Schwingung entlang der horizontalen Richtung 6 bestimmen.

Dementsprechend lässt sich durch einen Vergleich der lokal gemessenen tangentialen Beschleunigungen der Sensoren 3c und 3d bereits eine der Rotationsbewegung überlagerte vertikale Schwingung entlang der vertikalen Richtung 7 bestimmen.

Daher kann auch durch eine gemeinsame Steuerung der Tilger 2a und 2b eine Schwingung des Bauteils 1 in der horizontalen Richtung 6 gedämpft werden. Gleichermaßen kann auch durch ein Zusammenwirken der Tilger 2c und 2d eine Schwingung in der vertikalen Richtung 7 gedämpft werden.

Die hier nicht näher bezeichneten diagonal angeordneten Tilger 2 und Sensoren 3 können jeweils sowohl zur Messung von vertikalen als auch von horizontalen Schwingungen sowie zur Schwingungsdämpfung in horizontaler und vertikaler Richtung Verwendung finden. Alle Sensoren 3 können jedoch zur Messung der tangentialen Schwingungen beitragen, genauso wie alle Tilger 2 zur Dämpfung der tangentialen Schwingungen beitragen können. Dementsprechend lässt sich durch eine höhere Anzahl von Sensoren 3 und Tilgern 2 einerseits eine genauere Messung der ungewollten Schwingungskomponenten erzielen und gleichzeitig eine effektivere Schwingungsdämpfung erreichen.

Es ist hier nur vereinfacht von horizontaler und vertikaler Richtung gesprochen worden, wobei jedoch allgemein zwei kartesische Richtungen verwendet werden. Die kartesischen Richtungen bzw. Koordinaten werden vorzugsweise körperfest bezüglich des Bauteils gewählt, sie können also ein mitrotierendes Koordinatensystem betreffen.

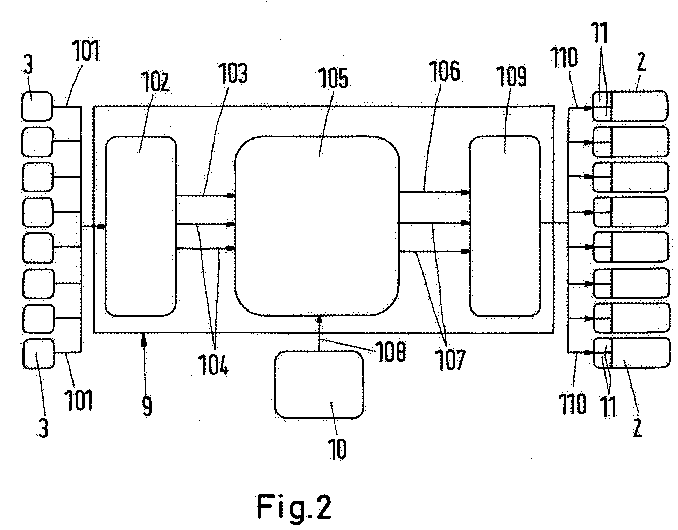

Fig. 2 zeigt nun schematisch den Ablauf des erfindungsgemäßen Verfahrens.

Zunächst werden durch die Sensoren 3 (hier beispielhaft die acht Sensoren entsprechend Fig. 1) Messsignale 101, insbesondere tangentiale Beschleunigungssignale, bereitgestellt. Diese können beispielsweise an eine Steuereinheit 9 geliefert werden. In einem ersten Umwandlungsschritt 102 werden dann die einzelnen Messsignale 101 kombiniert zu einem tangentialen Signal 103 sowie zwei kartesischen Signalen 104.

In einem Steuerungsschritt 105 wird nun auf Grundlage des tangentialen Signals 103 und der kartesischen Signale 104 ein tangentiales Steuersignal 106 sowie zwei kartesische Steuersignale 107 erzeugt. Die Steuerung erfolgt also in den virtuellen tangentialen und kartesischen Koordinaten, wodurch sich besser sicherstellen lässt, dass die einzelnen Tilger möglichst effektiv gesteuert werden und sich insbesondere nicht gegenseitig stören.

Zusätzlich kann in diesem Steuerungsschritt 105 beispielsweise durch einen Drehzahlsensor 10 ein Drehzahlsignal 108 geliefert werden, um das tangentiale Signal 103 und die kartesischen Signale 104 zu ergänzen. Hierdurch lassen sich insbesondere höherharmonische und quasi-stationäre Schwingungen besser identifizieren und die Steuersignale 106, 107 präziser berechnen.

Als nächstes wird in einem zweiten Umwandlungsschritt 109 aus dem tangentialen Steuersignal 106 und den kartesischen Steuersignalen 107 beispielsweise durch Koordinatentransformation die einzelnen Tilger-Steuersignale 110 erzeugt. Die Tilger-Steuersignale 110 werden dann an die einzelnen Tilger 2 bzw. gegebenenfalls an lokale Leistungsverstärker 11 der Tilger 2 geliefert. Jeden Tilger können ein oder mehrere (beispielsweise zwei) Leistungsverstärker 11 zugeordnet sein.

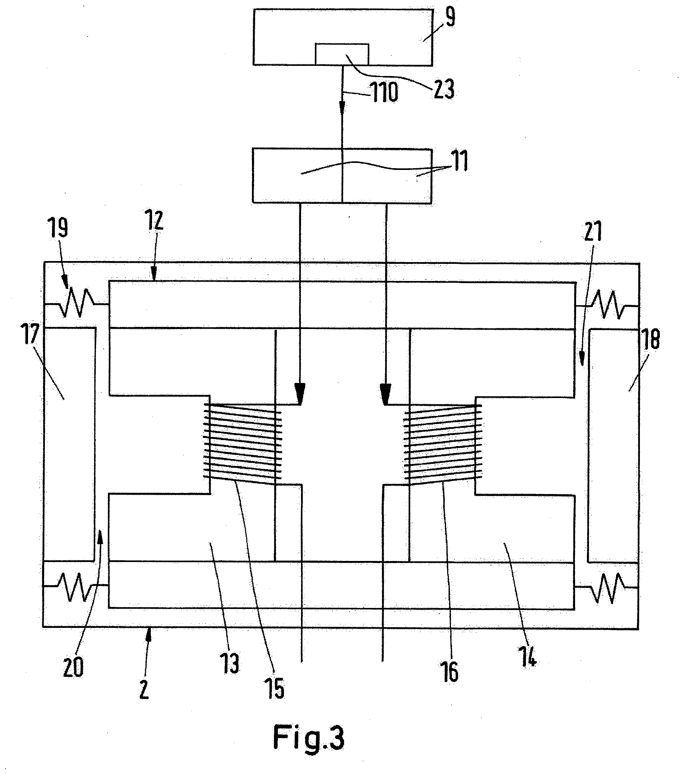

Fig. 3 zeigt nun detaillierter den Aufbau eines einzelnen Tilgers 2. Der Tilger 2 umfasst eine linear geführte Reaktionsmasse 12. Zwei Elektromagneten 13, 14 sind Bestandteil der Reaktionsmasse 12. Die Elektromagnete 13, 14 umfassen jeweils eine Spule 15, 16. An gegenüberliegenden Enden des Tilgers 2 ist je ein magnetisierbares Teil 17, 18 angeordnet. Die magnetisierbaren Teile können aus einem ferromagnetischen Material bestehen. Die Reaktionsmasse 12 mit den Elektromagneten 13, 14 ist beispielsweise über Federn 19 aufgehängt. Die Federn 19 definieren hier die Tilgersteifigkeit. Die Federn 19 sind vorzugsweise als Elastomerfedern ausgebildet.

Zwischen je einem magnetisierbaren Teil 17, 18 und je einem Elektromagnet 13, 14 ist je ein Luftspalt 20, 21 angeordnet. Die Größe der Luftspalte 20, 21 in der Ruheposition der Reaktionsmasse 12 lässt sich über eine Stellvorrichtung einstellen. Dies erfolgt üblicherweise durch eine manuelle Einstellung beim Zusammenbau des Tilgers. Es ist besonders bevorzugt, wenn in der Ruheposition der Reaktionsmasse 12 die Größe der beiden Luftspalte 20, 21 gleich groß gewählt wird.

Die Leistungsverstärker 11 werden zunächst von der Steuereinheit 9 mit einem Tilgersteuersignal 110 beliefert. Das Tilgersteuersignal 110 umfasst bereits für jeden Elektromagnet 13, 14 einen konstanten Vormagnetisierungsstrom sowie einen Steuerstrom mit positiven oder negativen Vorzeichen, die von der Steuereinheit 9 berechnet werden. Die Leistungsverstärker 11 verstärken diese Ströme und stellen sie den Elektromagneten zur Verfügung. Steuerströme und Vormagnetisierungsströme können von der Steuereinheit 9 berechnet werden und dann von einem Stromsteller 23 als Tilgersteuersignale 110 an den Tilger 2 bzw. vorgeschaltete Leistungsverstärker 11 geliefert werden. Der Stromsteller 23 kann, wie in Fig. 3 gezeigt, Teil der Steuereinheit 9 sein. Der Stromsteller 23 kann aber auch mit dem Leistungsverstärker 11 in einem gemeinsamen Bauteil angeordnet sein. Insbesondere können der Leistungsverstärker 11 und der Stromsteller 23 in einem Tilgermodul 4 mit einem Tilger 2 und einem Sensor 3 beispielsweise in einem Gehäuse zusammengefasst sein.

## Patentansprüche

1. Verfahren zur Schwingungsdämpfung von rotierenden oder rotationssymmetrischen Bauteilen,
wobei mindestens drei Sensoren (3) und mindestens drei aktive Tilger (2) umfangseitig an einem rotierenden oder rotationssymmetrischen Bauteil (1) angeordnet sind,
umfassend die folgenden Schritte:
- Bereitstellen von Messsignalen (101) durch die mindestens drei Sensoren (3),
- Umwandlung der Messsignale (101) in ein tangentiales Signal (103) und zwei kartesische Signale (104),
- Erzeugung von Tilger-Steuersignalen (110) zur Steuerung der mindestens drei aktiven Tilger (2) unter Verwendung des tangentialen Signals (103) und der zwei kartesischen Signale (104).

2. Verfahren nach Anspruch 1, **dadurch gekennzeichnet, dass** aus dem tangentialen Signal (103) und den zwei kartesischen Signalen (104) ein tangentiales Steuersignal (106) und zwei kartesische Steuersignale (107) erzeugt werden, wobei die Tilger-Steuersignale (110) aus dem tangentialen Steuersignal (106) und den zwei kartesischen Steuersignalen (107) erzeugt werden.

3. Verfahren nach Anspruch 1 oder 2, **dadurch gekennzeichnet, dass** zusätzlich zu den Messsignalen (110) der Sensoren (3) ein Drehzahlsignal (108) des Bauteils (1) bereitgestellt wird.

4. Verfahren nach einem der Ansprüche 1 bis 3, **dadurch gekennzeichnet, dass** mindestens ein Sensor (3) eine lineare Messrichtung aufweist, und mindestens ein Tilger (2) ein linearer Tilger ist, wobei die Messrichtung des linearen Sensors (3) mit der Wirkrichtung des linearen Tilgers (2) übereinstimmt.

5. Verfahren nach einem der Ansprüche 1 bis 4, **dadurch gekennzeichnet, dass** die Wirkrichtungen aller Tilger (2) in einer gemeinsamen Ebene, insbesondere in einer Ebene senkrecht zu einer Symmetrie- und/oder Rotationsachse des Bauteils (1), angeordnet sind.

6. Verfahren nach einem der Ansprüche 1 bis 5, **dadurch gekennzeichnet, dass** die Messrichtungen aller Sensoren in einer gemeinsamen Ebene, insbesondere in einer Ebene senkrecht zu einer Symmetrie- und/oder Rotationsachse des Bauteils (1), angeordnet sind.

7. Verfahren nach einem der Ansprüche 1 bis 6, **dadurch gekennzeichnet, dass** die Steuersignale (106, 107, 110) derart gewählt werden, dass die kartesischen Signale (104) und/oder die höherharmonischen Anteile des tangentialen Signals (103) minimiert werden.

8. Vorrichtung zur Schwingungsdämpfung von rotierenden oder rotationssymmetrischen Bauteilen, umfassend eine Steuereinheit (9), sowie mindestens drei Sensoren (3) und mindestens drei aktive Tilger (2), wobei die mindestens drei Sensoren (3) und die mindestens drei aktiven Tilger (2) umfangseitig an einem rotierenden oder rotationssymmetrischen Bauteil (1) angeordnet sind, **dadurch gekennzeichnet, dass** die Vorrichtung dazu ausgelegt ist, ein Verfahren nach einem der Ansprüche 1 bis 7 durchzuführen.

9. Vorrichtung nach Anspruch 8, **dadurch gekennzeichnet, dass** mindestens ein Tilger (2) eine, insbesondere durch elastomere Federn (19), elastisch aufgehängte Reaktionsmasse (12) umfasst, die durch mindestens zwei, insbesondere differentiell wirkende, Elektromagnete (13, 14) bewegt wird.

10. Vorrichtung nach Anspruch 9, **dadurch gekennzeichnet, dass** die Elektromagnete (13, 14) Teil der Reaktionsmasse (12) sind.

11. Vorrichtung nach Anspruch 9 oder 10, **dadurch gekennzeichnet, dass** die Elektromagnete (13, 14) oder den Elektromagneten (13, 14) vorgeschaltete Leistungsverstärker (11) durch einen Stromsteller (23) mit einem konstanten Vormagnetisierungsstrom sowie einem Steuerstrom mit positivem oder negativem Vorzeichen versorgt werden.

12. Vorrichtung nach einem der Ansprüche 9 bis 11, **dadurch gekennzeichnet, dass** mindestens ein Tilger (2) mindestens zwei magnetisierbare Teile (17, 18) umfasst, wobei zwischen je einem magnetisierbaren Teil (17, 18) und je einem Elektromagneten (13, 14) ein Luftspalt (20, 21) angeordnet ist.

13. Vorrichtung nach Anspruch 12, **dadurch gekennzeichnet, dass** die Größe der Luftspalte (20, 21) in der Ruheposition der Reaktionsmasse (12) über eine Stellvorrichtung einstellbar ist.

14. Vorrichtung nach Anspruch 12 oder 13, **dadurch gekennzeichnet, dass** die Elektromagnete (13, 14) mindestens eines Tilgers (2) lokale Leistungsverstärker (11) aufweisen.

15. Vorrichtung nach einem der Ansprüche 8 bis 14, **dadurch gekennzeichnet, dass** mindestens ein Sensor (3) ein zur Größe einer Beschleunigung proportionales Stromsignal an die Steuereinheit (9) liefert.

## Claims

1. A method for vibration-damping rotating or rotation-symmetrical components, wherein at least three sensors (3) and at least three active dampers (2) are arranged on a rotating or rotation-symmetrical component (1) on the circumference side, comprising the following steps:
- providing measurement signals (101) by way of the at least three sensors (3),
- converting the measurement signals (101) into a tangential signal (103) and two Cartesian signals (104),
- generating damper control signals (110) for controlling the at least three active dampers (2) utilising the tangential signal (103) and the two Cartesian signals (104).

2. The method according to Claim 1, **characterized in that** from the tangential signal (103) and the two Cartesian signals (104) a tangential control signal (106) and two Cartesian control signals (107) are generated, wherein the damper control signals (110) are generated from the tangential control signal (106) and the two Cartesian control signals (107).

3. The method according to Claim 1 or 2, **characterized in that** in addition to the measurement signals (110) of the sensors (3) a rotational speed signal (108) of the component (1) is provided.

4. The method according to any one of the Claims 1 to 3, **characterized in that** at least one sensor (3) comprises a linear measurement device, and at least one damper (2) is a linear damper, wherein the measurement direction of the linear sensor (3) coincides with the direction of action of the linear damper (2).

5. The method according to any one of the Claims 1 to 4, **characterized in that** the directions of action of all dampers (2) are arranged in a common plane, in particular in a plane that is perpendicular to an axis of symmetry and/or rotation of the component (1).

6. The method according to any one of the Claims 1 to 5, **characterized in that** the measurement directions of all sensors are arranged in a common plane, in particular in a plane that is perpendicular to an axis of symmetry and/or rotation of the component (1).

7. The method according to any one of the Claims 1 to 6, **characterized in that** control signals (106, 107, 110) are selected in such a manner that the Cartesian signals (104) and/or the higher harmonic proportions of the tangential signal (103) are minimised.

8. A device for vibration-damping rotating or rotation-symmetrical components, comprising a control unit (9) as well as at least three sensors (3) and at least three active dampers (2), wherein the at least three sensors (3) and the at least three active dampers (2) are arranged on a rotating or rotation-symmetrical component (1) on the circumference side, **characterized in that** the device is designed in order to carry out a method according to any one of the Claims 1 to 7.

9. The device according to Claim 8, **characterized in that** at least one damper (2) includes a reaction mass (12) that is elastically suspended in particular by way of elastomer springs (19), which reaction mass (12) is moved by way of at least two electromagnets (13, 14) which in particular act differentially.

10. The device according to Claim 9, **characterized in that** the electromagnets (13, 14) are part of the reaction mass (12) .

11. The device according to Claim 9 or 10, **characterized in that** the electromagnets (13, 14) or power amplifiers (11) connected upstream of the electromagnets (13, 14) are supplied by a power controller (23) with a constant bias current and a control current with positive or negative sign.

12. The device according to any one of the Claims 9 to 11, **characterized in that** at least one damper (2) includes at least two magnetisable parts (17, 18), wherein between a magnetisable part (17, 18) each and an electromagnet (13, 14) each, an air gap (20, 21) is arranged.

13. The device according to Claim 12, **characterized in that** the size of the air gaps (20, 21) in the rest position of the reaction mass (12) is adjustable via an adjusting device.

14. The device according to Claim 12 or 13, **characterized in that** the electromagnets (13, 14) of at least one damper (2) comprise local power amplifiers (11).

15. The device according to any one of the Claims 8 to 14, **characterized in that** at least one sensor (3) supplies a current signal that is proportional to the magnitude of an acceleration to the control unit (9).

## Revendications

1. Procédé pour l'amortissement des vibrations d'éléments en rotation ou à symétrie de révolution, dans lequel au moins trois capteurs (3) et au moins trois amortisseurs actifs (2) sont disposés du côté périphérique sur un élément (1) en rotation ou à symétrie de révolution, comprenant les étapes suivantes :
- la mise à disposition de signaux de mesure (101) par les au moins trois capteurs (3),
- la conversion des signaux de mesure (101) en un signal tangentiel (103) et deux signaux cartésiens (104),
- la génération de signaux de commande d'amortissement (110) pour commander les au moins trois amortisseurs actifs (2) en utilisant le signal tangentiel (103) et les deux signaux cartésiens (104).

2. Procédé selon la revendication 1, **caractérisé en ce que** l'on génère, à partir du signal tangentiel (103) et des deux signaux cartésiens (104), un signal de commande tangentiel (106) et deux signaux de commande cartésiens (107), dans lequel les signaux de commande d'amortissement (110) sont générés à partir du signal de commande tangentiel (106) et des deux signaux de commande cartésiens (107).

3. Procédé selon la revendication 1 ou 2, **caractérisé en ce qu'**en plus des signaux de mesure (110) des capteurs (3), on met à disposition un signal de vitesse de rotation (108) de l'élément (1).

4. Procédé selon l'une des revendications 1 à 3, **caractérisé en ce qu'**au moins un capteur (3) présente une direction de mesure linéaire, et qu'au moins un amortisseur (2) est un amortisseur linéaire, dans lequel la direction de mesure du capteur linéaire (3) coïncide avec la direction d'action de l'amortisseur linéaire (2).

5. Procédé selon l'une des revendications 1 à 4, **caractérisé en ce que** les directions d'action de tous les amortisseurs (2) sont disposées dans un plan commun, en particulier dans un plan perpendiculaire à un axe de symétrie et/ou de rotation de l'élément (1).

6. Procédé selon l'une des revendications 1 à 5, **caractérisé en ce que** les directions de mesure de tous les capteurs sont disposées dans un plan commun, en particulier dans un plan perpendiculaire à un axe de symétrie et/ou de rotation de l'élément (1).

7. Procédé selon l'une des revendications 1 à 6, **caractérisé en ce que** les signaux de commande (106, 107, 110) sont sélectionnés de manière à minimiser les signaux cartésiens (104) et/ou les parts d'harmonique supérieure du signal tangentiel (103).

8. Dispositif pour l'amortissement des vibrations d'éléments en rotation ou à symétrie de révolution, comprenant une unité de commande (9) ainsi qu'au moins trois capteurs (3) et au moins trois amortisseurs actifs (2), dans lequel les au moins trois capteurs (3) et les au moins trois amortisseurs actifs (2) sont disposés du côté périphérique sur un élément (1) en rotation ou à symétrie de révolution, **caractérisé en ce que** le dispositif est étudié pour mettre en oeuvre un procédé selon l'une des revendications 1 à 7.

9. Dispositif selon la revendication 8, **caractérisé en ce qu'**au moins un amortisseur (2) comprend une masse de réaction (12) suspendue élastiquement par des ressorts élastomères (19), laquelle est mise en mouvement par au moins deux électroaimants (13, 14), en particulier à effet différentiel.

10. Dispositif selon la revendication 9, **caractérisé en ce que** les électroaimants (13, 14) font partie de la masse de réaction (12).

11. Dispositif selon la revendication 9 ou 10, **caractérisé en ce que** les électroaimants (13, 14), ou des amplificateurs de puissance (11) montés en amont des électroaimants (13, 14), sont alimentés grâce à un actionneur de courant (23) avec un courant constant de prémagnétisation ainsi qu'un courant de commande avec un signe positif ou négatif.

12. Dispositif selon l'une des revendications 9 à 11, **caractérisé en ce qu'**au moins un amortisseur (2) comprend au moins deux parties magnétisables (17, 18), dans lequel un entrefer (20, 21) est disposé entre chaque partie magnétisable (17, 18) et chaque électroaimant (13, 14).

13. Dispositif selon la revendication 12, **caractérisé en ce que** la taille de l'entrefer (20, 21) est réglable dans la position de repos de la masse de réaction (12) via un dispositif de réglage.

14. Dispositif selon la revendication 12 ou 13, **caractérisé en ce que** les électroaimants (13, 14) d'au moins un amortisseur (2) présentent des amplificateurs de puissance locaux (11).

15. Dispositif selon l'une des revendications 8 à 14, **caractérisé en ce qu'**au moins un capteur (3) délivre un signal de courant proportionnel à l'ampleur d'une accélération à l'unité de commande (9).
